# EUROPÄISCHE PATENTSCHRIFT

(11) **EP 1 697 125 B1**
(45) Veröffentlichungstag und Bekanntmachung des Hinweises auf die Patenterteilung: **13.05.2009**
(21) Anmeldenummer: 04796938.1
(22) Anmeldetag: 09.11.2004
(51) Int. Cl.: B32B 21/06, B32B 21/08, E04B 1/00

(54) **VERFAHREN ZUR HERSTELLUNG EINES BRANDHEMMENDEN FURNIERS SOWIE BRANDHEMMENDES FURNIER**
METHOD FOR PRODUCING A FIRE-RETARDANT VENEER, AND CORRESPONDING FIRE-RETARDANT VENEER
PROCEDE DE PRODUCTION DE FEUILLE DE PLACAGE IGNIFUGEE ET FEUILLE DE PLACAGE IGNIFUGEE CORRESPONDANTE

(30) Priorität: 22.12.2003 AT 20662003
(43) Veröffentlichungstag der Anmeldung: 06.09.2006
(73) Patentinhaber: FACC AG, 4910 Ried Im Innkreis (AT)
(72) Erfinder: STEPHAN, Walter, A-4973 St. Martin (AT); EINBÖCK, Johann, A-4980 Antiesenhofen (AT)
(74) Vertreter: Sonn & Partner Patentanwälte
(86) Internationale Anmeldenummer: PCT/AT2004/000393
(87) Internationale Veröffentlichungsnummer: WO 2005/061221

(56) Entgegenhaltungen:
- DE-A1- 2 823 574
- DE-A1- 3 316 197
- DE-A1- 19 844 431
- US-A- 3 914 513
- US-A- 4 247 332

## Beschreibung

Die Erfindung betrifft ein Verfahren zur Herstellung eines brandhemmenden Furniers od. dgl. Materials oder Materialverbundes nach dem Oberbegriff des Patentanspruches 1.

Einen weiteren Gegenstand der Erfindung bildet ein Furnier, welches gemäß dem Verfahren nach Anspruch 1 hergestellt wurde. Ziel der Erfindung ist die Herstellung eines Furniers od. dgl. Materials, welches schwer entflammbar ist.

Bei einem Materialverbund können unterschiedliche Kernmaterialien vorhanden sein. In allen Fällen sind vorzugsweise keine Zusätze von Salzen oder anderen handelsüblichen Brandhemmstoffen vorhanden.

Ein weiteres Ziel der Erfindung ist die Schaffung eines einfachen und wirtschaftlichen Verfahrens zur Herstellung dünner Furnierblätter mit verbesserten Eigenschaften gegenüber bekannten Furnieren, welche Furnierblätter für die verschiedensten Anwendungen sowohl in der Luftfahrt als auch bei anderen sensiblen Bereichen eingesetzt werden können. Dies können öffentliche Einrichtungen, Schiffe, Yachten, Eisenbahn oder andere Einrichtungen mit dem Anspruch auf Brandschutz sein.

Die US 4 247 332 A beschreibt wohl ein Verfahren zur Herstellung brandhemmender Furniere, beschreibt aber, dass die durch Hitzeeinwirkung getrocknete Oberfläche mit einem wasserlöslichen, flammhemmenden Mittel imprägniert wird.

Die DE 198 44 431 A1 beschreibt die Imprägnierung einer Sperrkorklage, die jedoch nicht als Furnier im Sinne der vorliegenden Erfindung bezeichnet werden kann.

Das oben erwähnte Ziel wird durch die Maßnahme nach dem kennzeichnenden Teil des Patentanspruches 1 erreicht.

Das so erhaltene Furnier kann einem weiteren Behandlungs- oder Veredelungsprozess unterzogen werden. So ist es beispielsweise möglich, das Furnier zu beizen und/oder mit Lacken, vorzugsweise klaren Lacken, zu lackieren. Mit speziellen Lacksystemen ist auch eine Hochglanzfläche zu erzeugen.

Der Prozess der Furnierveredelung erfolgt unter der Einwirkung von Wärme und Druck (0,5 - 7 bar) über einen Zeitraum zwischen 10 und 120 min. Wichtig hierbei ist, dass durch ein längeres Einwirken von Wärme das Wasser in den Poren des Furniers die Möglichkeit hat zu entweichen und so das Harz (je nach Anforderungen Phenol- oder Epoxyharz) in die Poren des Holzes gelangen kann.

Die Wärme (je nach Harzsystem und Dauer zwischen 125° und 155°C) wird über das Furnier aufgebracht. Diese kann in Pressen über beheizte Pressplatten, in Autoklaven oder Öfen über die Oberfläche der jeweiligen Tools erfolgen. Hierbei ist bei Autoklaven und Öfen die Verwendung von Vakuumtools erforderlich.

Durch die Substitution des Wassers durch das Harz werden beim hydrophoben Werkstoff Holz zum einen die negativen Eigenschaften des Quellens und Schwindens reduziert, was sich positiv auf die Maßhaltigkeit auswirkt, und zum anderen das Brandverhalten des dünnen Furnierblattes durch ein schwer brennbares Harzsystem erheblich verbessert.

Das Harz wird durch die Kapillarwirkung in das Furnier eingebracht. Durch die Zufuhr von Energie in Form von Wärme wird das in den Poren des Furniers gebundene Wasser zum Verdampfen gebracht. Der nun aus dem Furnier entweichende Wasserdampf zieht in Folge das flüssige Harz in die Poren des Furniers. Der Druckausgleich erfolgt in einer Presse durch Ausströmen des Dampfes über Kanten des Verbundes, im Autoklaven und Ofen über die Vakuumleitung und bzw. oder Wärmebehandlung durch andere Art. Dieser Prozess kann durch den Einsatz von perforierten Trennpapieren beschleunigt werden.

Trennpapiere, Trennfolien od. dgl. können auch als Unterlage zur Verhinderung des Entweichens von Harz durch Einsaugen oder Eindrücken nach Entweichen des Dampfes verwendet werden.

Das so behandelte Furnier kann nach der Aushärtung des Harzes wie jedes andere Furnier weiter verarbeitet werden.

Bei diesem Veredelungsprozess wird ein auf die gewünschte Größe zusammengesetztes Furnierblatt (0,7 mm) mit einem Harzfilm verpresst. Die Dauer zur Verpressung, die Temperatur sowie der Druck sind je nach eingesetztem Harzsystem und den verwendeten Holzarten unterschiedlich. Zum Erzeugen von Materialverbunden kann bei dem oben geschilderten Prozess auch ein Kernmaterial mitverpresst werden. Durch die Verwendung eines Harzfilms wird eine homogene Verteilung des Harzes über die gesamte Fläche des Furniers gewährleistet.

Der so entstandene Verbund kann nach Behandlung mittels Lacken für hochwertige Echtholzfurniermöbel unter anderem in der Luftfahrt eingesetzt werden. Weiters kann der Verbund in allen anderen brandtechnisch sensiblen Bereichen zur Anwendung kommen. Durch die geänderten Eigenschaften des Furniers wird auch dessen Quell- und Schwindverhalten maßgeblich reduziert.

In Kombination von Harz, welches bereits in der Imprägnierung von Fasergeweben vorliegt mit verschiedenen Kernmaterialien, wie z.B. Wabenkernen, lassen sich so leichte und dekorative Verbundwerkstoffe herstellen, die auch den hohen Anforderungen der Luftfahrt standhalten.

Weitere Merkmale der Erfindung werden an Hand der Zeichnung näher erläutert, in welcher zwei Ausführungsbeispiele für die Verfahrensschritte zur Herstellung eines vergüteten Furniers in vereinfachter Form dargestellt sind.

### Es zeigen:

- Fig.: 1 die Herstellung eines Furniers; und
- Fig.: 2 die eines Verbundes.

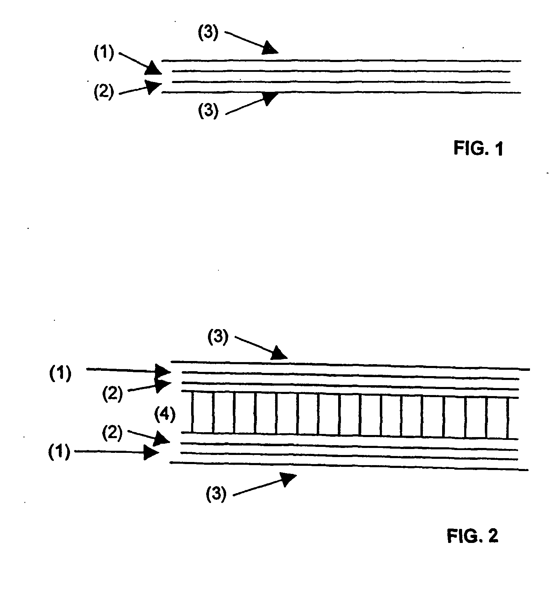

Gemäß Fig. 1 wird ein auf das gewünschte Maß zusammengesetztes Furnierblatt 1 auf einen Harzfilm 2 gelegt, worunter eine Lage aus einem Trennmaterial, z.B. ein Trennpapier 3, vorhanden ist. Nach Abdecken des Furnierblattes 1 mit einer weiteren Lage aus einem Trennmaterial, beispielsweise einem Trennpapier 3', wird das Furnierblatt 1 in einer Heizpresse verpresst. Je nach Verfahren, Harzsystem und Temperatur kann dieser Prozess zwischen 10 und 120 min betragen (z.B. 10 min bei 155°C "Hot In - Hot Out" Verfahren und Stesalith Harzsystem bei einem Druck von 2 bar). Das so erhaltene Furnier kann jeder Art der Vergütung unterzogen werden.

Gemäß dem Ausführungsbeispiel nach Fig. 2 werden zwei auf das gewünschte Maß zusammengesetzte Furnierblätter 1 nach Fig. 1 mit einer Zwischenlage 4 aus einem Kernmaterial beispielsweise in Form eines Wabenkörpers mit beliebigen Wabenprofilen, z.B. in Form eines Leichtbaukernes zusammengefügt. Der Leichtbaukern kann aus Wellmaterial und dazwischen gelegenen ebenen Materialbahnen aus imprägniertem Material bestehen. Das Wabenmaterial kann Holz oder Metall, z.B. Blech, sein. Als Harzfilm 2 kann harzgetränktes Fasermaterial (Prepreg) und bzw. oder ähnliches Material verwendet werden. Als Kernmaterial 4 kann auch das unter dem Handelsnamen Nomex bekannte Material dienen. Der so erhaltene Verbundkörper wird in einer Heizpresse verpresst. Je nach Verfahren, Harzsystem und Temperatur kann dieser Prozess zwischen 10 und 120 min betragen (z.B. 10 min bei 155°C "Hot In - Hot Out" Verfahren und Stesalith Harzsystem bei einem Druck von 1 bar).

Selbstverständlich können im Rahmen der Erfindung auch mehr als zwei Furniere gemäß Fig. 1 mit einer jeweiligen Zwischenlage aus einem Kernmaterial zu einem Verbundkörper zusammengesetzt werden.

## Patentansprüche

1. Verfahren zur Herstellung eines brandhemmenden Flachbauteiles, welches durch Wärmeeinwirkung getrocknet wird, **dadurch gekennzeichnet, dass** die durch Wärmeeinwirkung den Poren eines Furniers entzogene Flüssigkeit durch Harz ersetzt wird.

2. Verfahren nach Anspruch 1, **dadurch gekennzeichnet, dass** mindestens ein Furnierblatt (1) mit einem Harzfilm (2) und einem beiderseits vorgesehenen Trennpapier (3), einer Trennfolie od. dgl. Trennmaterials in einer Wärme oder Hitze zu führenden Einrichtung, beispielsweise einer Heizpresse, einem Autoklav od. dgl. behandelt wird.

3. Verfahren nach Anspruch 2, **dadurch gekennzeichnet, dass** mindestens zwei jeweils von einem Trennmaterial abgedeckte Furnierblätter (1) mit einer Zwischenlage eines Kernmaterials (4) verbunden werden.

4. Verfahren nach Anspruch 3, **dadurch gekennzeichnet, dass** zwischen dem Kernmaterial (4) und dem jeweiligen Furnierblatt (1) ein vorzugsweise harzgetränktes Gewebe (2), beispielsweise ein Fasergewebe, angeordnet wird.

5. Furnier, hergestellt nach Anspruch 1, **dadurch gekennzeichnet, dass** es zumindest einseitig durch einen Harzfilm (2) und beidseitig durch ein Trennpapier (3), eine Trennfolie und bzw. od. dgl. Trennmaterial abgedeckt ist.

6. Furnier nach Anspruch 5, **dadurch gekennzeichnet, dass** mindestens zwei Furnierblätter (1) mit einem dazwischen gelegenen Kern (4) einen Verbundkörper bilden.

## Claims

1. A method of producing a fire-retardant flat structural member which is dried by the influence of heat, **characterized in that** the liquid withdrawn from the pores of a veneer by the influence of heat is substituted by a resin.

2. The method according to claim 1, **characterized in that** at least one veneer sheet (1) with a resin film (2), and with a release paper (3), a release foil or the like separating material provided on both sides thereof is treated in a device that supplies warm temperatures or heat, e. g. in a heating press, an autoclave or the like.

3. The method according to claim 2, **characterized in that** at least two veneer sheets (1) each covered by a separating material are connected to an intermediate layer of a core material (4).

4. The method according to claim 3, **characterized in that** a preferably resin-impregnated, fabric (2), e.g. a fiber fabric, is arranged between the core material (4) and the respective veneer sheet (1).

5. A veneer, produced according to claim 1, **characterized in that** on at least one side thereof it is covered by a resin film (2) and on both sides thereof it is covered by a release paper (3), a release foil and/or the like separating material.

6. The veneer according to claim 5, **characterized in that** at least two veneer sheets (1) form a composite body with a core (4) located therebetween.

## Revendications

1. Procédé de fabrication d'un composant plat ignifuge, qui est séché par action de la chaleur, **caractérisé en ce que** l'on remplace par de la résine le liquide extrait des pores d'un placage par action de la chaleur.

2. Procédé selon la revendication 1, **caractérisé en ce qu'**au moins une feuille de placage (1) est traitée avec un film de résine (2) et un papier de séparation (3) appliqué sur les deux faces, une feuille de séparation ou un matériau de séparation similaire dans un dispositif appliquant de la chaleur, par exemple une presse à chaud, un autoclave ou similaire.

3. Procédé selon la revendication 2, **caractérisé en ce qu'**au moins deux feuilles de placage (1) recouvertes respectivement d'un matériau de séparation sont raccordées à une couche intermédiaire d'un matériau central (4).

4. Procédé selon la revendication 3, **caractérisé en ce qu'**un tissu (2) de préférence imbibé de résine, par exemple un tissu de fibres, est agencé entre le matériau central (4) et la feuille de placage respective (1).

5. Placage fabriqué selon la revendication 1, **caractérisé en ce qu'**il est recouvert, au moins sur une face, d'un film de résine (2) et, sur les deux faces, d'un papier de séparation (3), d'une feuille de séparation et/ou d'un matériau de séparation similaire.

6. Placage selon la revendication 5, **caractérisé en ce qu'**au moins deux feuilles de placage (1) forment un corps composite avec un matériau central (4) disposé entre elles.
